(19) Europäisches Patentamt / European Patent Office / Office européen des brevets

(11) **EP 3 335 783 A1**

(12) **EUROPEAN PATENT APPLICATION**

(43) Date of publication:
**20.06.2018 Bulletin 2018/25**

(51) Int Cl.:
**B01F 17/00** [(2006.01)]

(21) Application number: **16204657.7**

(22) Date of filing: **16.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **ETH Zurich
8092 Zurich (CH)**

(72) Inventors:
 • **ZANINI, Michele
  6852 Genesterio (CH)**
 • **ISA, Lucio
  8032 Zürich (CH)**

(54) **UNIVERSAL EMULSION STABILIZERS FOR PICKERING EMULSIONS**

(57)   Particles with controlled surface chemistry and high surface roughness are used as universal emulsion stabilizers for both oil-in-water type emulsions and water-in-oil type emulsions. The particles have an equilibrium contact angle of 65-115° and a contact angle hysteresis of at least 20° at an interface of an aqueous phase and a nonpolar phase. The large contact angle hysteresis can be achieved by providing a surface roughness of at least 7 nm RMS. The particles can have a raspberry-like appearance.

FIG. 6

**Description**

TECHNICAL FIELD

The present invention relates to methods of stabilizing Pickering emulsions using particles having controlled surface chemistry and high surface roughness and to a class of particles that are particularly suitable to be used in such methods.

PRIOR ART

Pickering emulsions are emulsions stabilized by the adsorption of solid particles onto the surface of the droplets in the emulsion. They find vast applications in the food, pharma, chemical, oil and mining industries. Up to now, oil-in-water type (o/w) and water-in-oil type (w/o) Pickering emulsions have always been stabilized using two different kinds of particles, hydrophilic and hydrophobic ones, respectively. This implies that a specific emulsifier type has to be designed to stabilize a specific type of emulsion. This often presents practical problems related to the free and independent choice of materials.

The following publications form technical background for the present invention:

[1] Alargova, R. G., Warhadpande, D. S., Paunov, V. N. & Velev, O. D. Foam Superstabilization by Polymer Microrods. Langmuir 20, 10371-10374, doi:10.1021/1a048647a (2004).

[2] Berger, S., Synytska, A., Ionov, L., Eichhorn, K.-J. & Stamm, M. Stimuli-Responsive Bicomponent Polymer Janus Particles by "Grafting from"/"Grafting to" Approaches. Macromolecules 41, 9669-9676, doi:10.1021/ma802089h (2008).

[3] Binks, B. P. & Rodrigues, J. A. Types of Phase Inversion of Silica Particle Stabilized Emulsions Containing Triglyceride Oil. Langmuir 19, 4905-4912, doi:10.1021/1a020960u (2003).

[4] Imperiali, L. et al. Interfacial Rheology and Structure of Tiled Graphene Oxide Sheets. Langmuir 28, 7990-8000, doi:10.1021/1a300597n (2012).

[5] Kim, J. et al. Graphene Oxide Sheets at Interfaces. Journal of the American Chemical Society 132, 8180-8186, doi:10.1021/ja102777p (2010).

[6] Kirillova, A., Marschelke, C., Friedrichs, J., Werner, C. & Synytska, A. Hybrid Hairy Janus Particles as Building Blocks for Antibiofouling Surfaces. ACS Applied Materials & Interfaces 8, 32591-32603, doi:10.1021/acsami.6b10588 (2016).

[7] Mable, C. J., Warren, N. J., Thompson, K. L., Mykhaylyk, O. O. & Armes, S. P. Framboidal ABC triblock copolymer vesicles: a new class of efficient Pickering emulsifier. Chemical Science 6, 6179-6188, doi:10.1039/C5SC02346G (2015).

[8] Madivala, B., Vandebril, S., Fransaer, J. & Vermant, J. Exploiting particle shape in solid stabilized emulsions. Soft Matter 5, 1717-1727, doi:10.1039/B816680C (2009).

[9] Niebel, T. P. et al. Multifunctional microparticles with uniform magnetic coatings and tunable surface chemistry. RSC Advances 4, 62483-62491, doi:10.1039/C4RA09698C (2014).

[10] Nonomura, Y., Kobayashi, N. & Nakagawa, N. Multiple Pickering Emulsions Stabilized by Microbowls. Langmuir 27, 4557-4562, doi:10.1021/1a2003707 (2011).

[11] San-Miguel, A. & Behrens, S. H. Influence of Nanoscale Particle Roughness on the Stability of Pickering Emulsions. Langmuir 28, 12038-12043, doi:10.1021/1a302224v (2012).

[12] Van Hooghten, R., Imperiali, L., Boeckx, V., Sharma, R. & Vermant, J. Rough nanoparticles at the oil-water interfaces: their structure, rheology and applications. Soft Matter 9, 10791-10798, doi:10.1039/C3SM52089G (2013).

[13] Vis, M. et al. Water-in-Water Emulsions Stabilized by Nanoplates. ACS Macro Letters 4, 965-968, doi:10.1021/acsmacrolett.5b00480 (2015).

[14] Isa, L., Lucas, F., Wepf, R. & Reimhult, E. Measuring single-nanoparticle wetting properties by freeze-fracture shadow-casting cryo-scanning electron microscopy. Nat Commun 2, 438, (2011).

SUMMARY OF THE INVENTION

In a first aspect of the present invention, particles are used as universal emulsion stabilizers for both oil-in-water type (o/w) emulsions and water-in-oil type (w/o) emulsions. The particles exhibit an equilibrium contact angle of 65°-115° and a contact angle hysteresis of at least 20°, preferably at least 30°, more preferably at least 40° at an interface between an aqueous phase and a nonpolar phase.

The invention proposes to use only one particle type as a universal emulsifier to stabilize both types of emulsions (o/w and w/o). This is made possible by using, as emulsion stabilizers, particles with tailored wettability and high contact angle hysteresis. If the particles possess a close-to-neutral wetting to the aqueous phase or the nonpolar phase (contact angles between 65 and 115 degrees at the interface between these phases), they can be successfully dispersed in both phases. If the particles additionally exhibit high contact angle hysteresis, they take up a very different wetting angle (contact angle) depending on which phase they are initially dispersed in, and thus from which "side of the o/w interface" they adsorb. In particular, starting from particles dispersed in the nonpolar phase, w/o emulsions are stabilized, while starting with particles in the aqueous phase, o/w emulsions are stabilized. Importantly, the same particles can be used to stabilize both emulsion types.

The particles can in particular be slightly hydrophilic, having an equilibrium contact angle in the range of 65-80° at the interface. In other embodiments, they can be slightly hydrophobic, having an equilibrium contact angle of 100-115° at the interface.

Preferably the particles have near-spherical shape with an average diameter of 0.1-5 micrometers, preferably 0.1-1 micrometers, particularly preferably 0.1-0.5 micrometers. In particular, the shape is considered to be "near-spherical" if deformations from a perfect spherical shape result in variations of the dimensions along three orthogonal spatial directions of less than 20%.

The desired high degree of contact angle hysteresis can be achieved by providing the particles with a surface roughness of at least 7 nanometers RMS, preferably at least 10 nanometers RMS, more preferably at least 15 nanometers RMS.

In the context of the present disclosure, the expression "surface roughness of x nanometers RMS" is to be understood as the surface roughness in nanometers as measured by topographical reconstruction of the particle surface using an Atomic Force Microscope (AFM), averaged by a root-mean-square (RMS) averaging procedure in the usual manner. In particular, the RMS surface roughness $R_{RMS}$ can be calculated as follows:

$$R_{RMS} = \sqrt{\frac{1}{n} \sum_{i=1}^{n} y_i^2} \, ,$$

where the surface topography is sampled by a large set of data points i that are equally distributed over a surface portion of the particle, where a smooth mean surface is determined for the data points (for essentially spherical particles, the mean surface would be a portion of a sphere), and where $y_i$ denotes the distance measured in the normal direction from the mean surface to the data point.

In the context of the present disclosure, the expression "oil-in-water type (o/w) emulsion" is to be understood to encompass any emulsion in which a comparatively less polar phase (the so-called nonpolar phase or oil phase) is dispersed in a comparatively more polar phase (the so-called polar phase or aqueous phase). Similarly, the expression "water-in-oil type (w/o) emulsion" is to be understood to encompass any emulsion in which a comparatively more polar phase is dispersed in a comparatively less polar phase. In other words, what matters is only that the phases have different degrees of polarity. In the same spirit, the expressions "aqueous phase" and "nonpolar phase" are to be understood broadly as referring to any two immiscible phases where the "aqueous phase" is more polar than the "nonpolar phase". For instance, the nonpolar phase can be an oil or an alkane, and the polar phase can be water or an aqueous solution.

In the context of the present disclosure, the expression "contact angle", when measured for a particle, is to be understood to refer to the contact angle as measured by FreSCa cryo-SEM (Freeze-Fracture Shadow-Casting coupled with cryo-Scanning-Electron-Microscopy). In particular, for contact angle measurements of particles adsorbed from water (or, in more general terms, from an aqueous phase as defined above), 0.5 µL of the aqueous particle suspensions are pipetted in a copper holder, pre-cleaned and hydrophilized, covered by 3.5 µL of oil (or, in more general terms, of a nonpolar phase as defined above) and then shock-frozen with liquid propane jets (e.g., Bal-Tec/Leica JFD 030, Balzers/Vienna). For contact angle measurements of particles adsorbed from oil (or, in more general terms, from a nonpolar phase), 0.5 µL of milliQ are pipetted in a copper holder, pre-cleaned and hydrophilized, covered by 3.5 µL of a dispersion of the particles in oil and then shock-frozen with liquid propane jets (e.g., Bal-Tec/Leica JFD 030, Balzers/Vienna). The shock-frozen samples are transferred under liquid nitrogen and fractured in high-vacuum conditions ($10^{-6}$ mbar) and at cryogenic temperatures (-120°C) in a freeze-etching device (e.g., Bal-Tec/Leica BAF060 device). The fracture is used to expose a macroscopically flat ($mm^2$ area) particle-laden oil-water interface. Particles stay trapped in the shock-frozen water phase and can be imaged in an SEM after removal of the frozen oil phase and after metal coating. For imaging, samples are freeze-dried for 1 minute at -100°C and then coated with 3 nm tungsten at a deposition angle of 30° followed by additional 3 nm at continuously varying angles between 30° and 90°. Freeze-fractured metal-coated samples are imaged in a pre-cooled SEM (-120°C) (e.g., Zeiss Gemini 1530, Oberkochen). The tungsten coating at an oblique angle induces particles protruding from the exposed interface to cast shadows. From the direct measurement of the particle size and the length of the cast shadows, using simple trigonometric relations, the height of the particle center relative to the interface, and thus its contact angle can be measured. The method is described in more detail in document [14] (see list of documents in section "Prior Art"). Contact angles are by convention reported as measured relative to the aqueous phase.

In the context of the present disclosure, the expression "equilibrium contact angle" is to be understood as denoting the contact angle that would be formed at the three-phase contact line of the interface between the aqueous phase and the nonpolar phase on a smooth surface with the same surface chemistry as the surface chemistry of the particles.

In the context of the present disclosure, the expression "contact angle hysteresis" is to be understood as the difference between the contact angle of the particles at the interface between the aqueous phase and the nonpolar phase that is established if the particles are first dispersed in the aqueous phase before the nonpolar phase is added and the contact angle of the particles at the interface between the aqueous and the nonpolar phase that is established if the particles are first dispersed in the nonpolar phase before the aqueous phase is added.

Instead of using surface roughness, the particles can be provided with a high degree of "chemical roughness" by providing a heterogeneous distribution of different surface chemistries to provide simultaneously solubility in aqueous and nonpolar phases but also a very large wetting hysteresis. For instance, the particles can have a generally hydrophilic surface of which a plurality of hydrophobic patches are formed, the hydrophobic patches being distributed over the surface of the particles, or vice versa.

In preferred embodiments, the particles comprise a near-spherical core and surface asperities distributed on a surface of the core, the surface asperities having

average height of 15-30 nanometers and lateral dimensions of 10-30 nanometers for particles having an average diameter between 0.1 and 0.5 micrometers,

average height of 15-100 nanometers and lateral dimensions of 10-100 nanometers for particles having an average diameter between 0.5 and 1 micrometers, or

average height of 15-300 nanometers and lateral dimensions of 10-300 nanometers for particles having an average diameter between 1 and 5 micrometers.

The height of the surface asperities is measured in the direction perpendicular to the particle surface, while the lateral dimensions of the asperities are measured along two orthogonal directions parallel to the particle surface. The surface asperities are preferably distributed homogeneously over the surface of the particles, giving the particles a raspberry-like appearance and minimum values of RMS surface roughness of 7 nm. In some embodiments the surface asperities have themselves an at least partially spherical shape, i.e. their shape can be well approximated by a segment of a sphere.

The surface asperities can have a monomodal size distribution, i.e. the surface asperities can have a well-defined narrow size range, or they can have a size distribution that is bimodal or multimodal, i.e. the surface asperities can have a size distribution having maxima at two or more values of the average diameter, wherein each two maxima are different by a factor of at least 1.5, preferably by a factor of at least 2. In particular, the particles can be so-called binary raspberries, having surface asperities of two different narrowly defined size ranges.

When the particles are used as universal emulsion stabilizers, the type of emulsion that is formed depends on the phase in which the particles are first dispersed. An oil-in-water type emulsion is formed by first dispersing the particles in the aqueous phase, and a water-in-oil type emulsion is formed by first dispersing the particles in the nonpolar phase, before the phases are thoroughly mixed to form the emulsion.

In particular, the present invention contemplates a method of forming a first emulsion, the method comprising:

dispersing particles in an aqueous phase, wherein the particles have an equilibrium contact angle of 65-115° and a contact angle hysteresis of at least 20°, preferably at least 30°, more preferably at least 40° at the interface between the aqueous phase and a nonpolar phase;

mixing the aqueous phase comprising the particles dispersed therein with the nonpolar phase to form said first emulsion,

whereby an oil-in-water type emulsion is formed, droplets of the nonpolar phase being formed in the aqueous phase, the droplets defining an interface between the aqueous phase and the nonpolar phase.

On the other hand, the present invention also contemplates a method of forming a second emulsion, the method comprising:

dispersing particles in a nonpolar phase, wherein the particles have an equilibrium contact angle of 65-115° and a contact angle hysteresis of at least 20°, preferably at least 30°, more preferably at least 40° at the interface between the nonpolar phase and an aqueous phase;

mixing the nonpolar phase comprising the particles dispersed therein with the aqueous phase to form said second emulsion,

whereby an water-in-oil type emulsion is formed, droplets of the aqueous phase being formed in the nonpolar phase, the droplets defining an interface between the aqueous phase and the nonpolar phase.

Preferably both the first emulsion and the second emulsion are formed with the same type of particles as universal emulsion stabilizers.

In another aspect, the present invention provides a raspberry-like particle having an equilibrium contact angle of 65-115° and a contact angle hysteresis of at least 20°, preferably at least 30°, more preferably at least 40° at an interface between an aqueous phase and a nonpolar phase, in particular, between water and n-decane, the particle having near-spherical shape with an average diameter of 0.1-5 micrometers, preferably 0.1-1 micrometers, particularly preferably 0.1-0.5 micrometers, the particle having a surface roughness of at least 7 nm RMS. Such particles are especially well suited for the use as universal emulsion stabilizers.

As already mentioned above, the particles can in particular be slightly hydrophilic, having an equilibrium contact angle in the range of 65-80° at the interface. In other embodiments, they can be slightly hydrophobic, having an equilibrium contact angle of 100-115° at the interface.

In particular, the particle can comprise a core of near-spherical shape and surface asperities, which in some embodiments can be of at least partially spherical shape, distributed on a surface of the core, the surface asperities having:

an average height of 15-30 nanometers and lateral dimensions of 10-30 nanometers for a core having an average diameter between 0.1 and 0.5 micrometers,
an average height of 15-100 nanometers and lateral dimensions of 10-100 nanometers for a core having an average diameter between 0.5 and 1 micrometers, or
an average height of 15-300 nanometers and lateral dimensions of 10-300 nanometers for a core having an average diameter between 1 and 5 micrometers.

As discussed above, the surface asperities can have a monomodal, bimodal or multimodal size distribution.

In some embodiments, the core is made of silica, and the surface asperities are formed by silica nanoparticles disposed on the core, the silica nanoparticles having an average diameter of

10-30 nanometers for a core having an average diameter between 0.1 and 0.5 micrometers,
10-100 nanometers for a core having an average diameter between 0.5 and 1 micrometers, or
10-300 nanometers for a core having an average diameter between 1 and 5 micrometers.

The core can be functionalized with a polyelectrolyte or molecular coating that facilitates electrostatic adhesion of said silica nanoparticles to the core.

The particle can further comprise at least one surface layer disposed on an outer surface of said particle, the surface layer covering the surface asperities so as to reduce surface roughness of the particle and improve the adhesion of the asperities on the core surface. The surface layer can be made of silica.

The particles can be provided in the form of a powder or colloid.

While the above-described silica particles are one useful class of particles that can be used in the context of the present disclosure, any particles with the characteristics described above (in particular, equilibrium contact angle and contact angle hysteresis) can be used to the same end. Therefore, also already existing types of particles might be used as "universal emulsifiers" if they satisfy the above requirements.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1    shows a schematic representation of the macroscopic contact angle of a liquid drop on a solid surface (part (a)) and of the microscopic, single-particle contact angle at a fluid interface (part (b));

Fig. 2    shows a sketch illustrating the formation of raspberry-like particles that can be used in the present invention;

Fig. 3    shows an illustration of the process of surface smoothening by depositing one or more silica layers on raspberry-like particles;

Fig. 4    shows electron micrographs of three exemplary raspberry-like particles with different surface roughness;

Fig. 5    shows a sketch illustrating the stabilization of o/w emulsions by hydrophobic particles (parts (a) and (b)) and of w/o emulsions by hydrophilic particles (parts (c) and (d)), as it is known from the prior art;

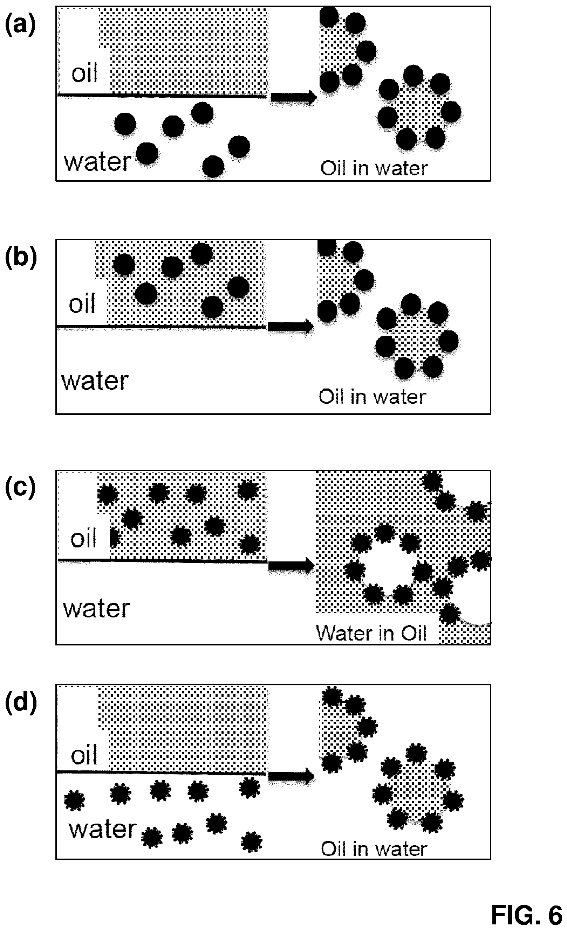

Fig. 6    shows, in part (a), a sketch illustrating the stabilization of an o/w emulsion by first dispersing smooth, slightly hydrophilic particles in the aqueous phase and then mixing with the oil phase; in part (b), a sketch illustrating that the same result is obtained by first dispersing the same particles in the oil phase and then mixing with the aqueous phase; in part (c), a sketch illustrating that a w/o emulsion is formed if slightly hydrophobic, rough particles are first dispersed in the oil phase; and in part (d), a sketch illustrating that an o/w emulsion is instead formed if the same particles are first dispersed in the aqueous phase;

Fig. 7    shows a diagram illustrating contact angle hysteresis as a function of surface roughness.

DETAILED DESCRIPTION

**Contact angle and nano wetting**

The concept of wetting is most commonly thought in relation to the spreading of a liquid onto a solid surface. Whether the liquid spreads or not is given by the balance of the interfacial energies between the solid, the liquid and a second fluid phase constituting the environment (most commonly air, but any liquid or gas can play the same role). The same line of reasoning leads to the definition of the contact angle of a solid particle at a fluid interface. By imagining to shrink down the solid to a small particle, the balance of the interfacial energies will still determine the position of the three-phase contact line relative to the solid. Particles that are mostly immersed in the water phase are called hydrophilic and have a contact angle $\Theta < 90°$, while particles that are mostly immersed in the oil phase are called hydrophobic and have a contact angle $\Theta > 90°$.

Solid particles can spontaneously adsorb at free fluid surfaces, where they form stable films that impart new mechanical properties to the interface. This phenomenon is at the basis of the most extensive use of particles at interfaces, which is to employ them as stabilizers, i.e. primarily as means to prevent the coalescence between bubbles or droplets whose surface is coated by a particle monolayer. This class of materials is now commonly called Pickering (or Pickering-Ramsden) emulsions and foams.

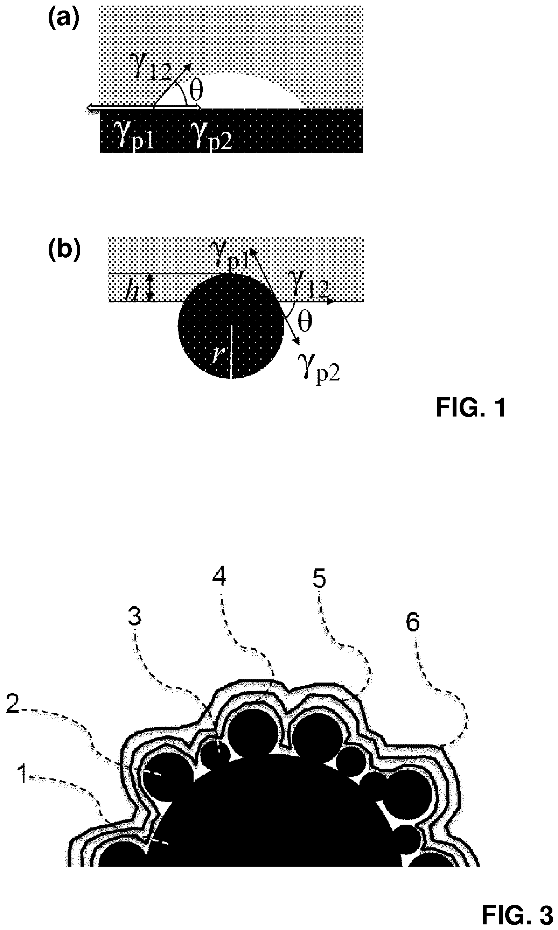

Figure 1 shows a schematic representation of the macroscopic contact angle of a liquid drop on a solid surface (part a) and of the microscopic, single- particle contact angle at a fluid interface (part b). The interfacial tensions $\gamma_{p1}$, $\gamma_{p2}$ and $\gamma_{12}$, the particle radius r, the protrusion height h and the contact angle $\Theta$ are highlighted.

## Synthesis of model rough particles

Model rough silica particles were created by adsorption of smaller silica nanoparticles to a larger core particle, giving the resulting particles an appearance resembling a raspberry. These particles can be considered models for rough surfaces because the size and surface density of asperities with a well-defined spherical shape are finely controlled. Furthermore the height of the asperities can be controlled independently from their lateral dimensions by growing an additional silica layer, as described below.

In a typical procedure to obtain approximately one micrometer-sized raspberry-like particles, 1 g (corresponding to 3.14 mL of 26.55 wt% silica solution) of homemade silica particles (Stöber process, d = 960 nm $\pm 36$ nm) was added to 40 mL milliQ water. 1 mL of polydiallyldimethylammonium chloride (poly-DADMAC, 400-500 kDa, 20 vol%, Sigma-Aldrich) was added to the suspension. The reaction was carried out in a cleaned 50 mL glass vial under vigorous stirring for 10 minutes. The suspension was then washed three times (centrifugation 10 min, 4000 rpm) and lastly re-dispersed in 10 mL milliQ water to get a final concentration of 100 mg/mL. To create electrostatically driven raspberry-like particles, the second particle suspension and milliQ water were added to the poly-DADMAC-modified $SiO_2$ colloids (DADMAC@$SiO_2$). To obtain raspberry-like particles with asperities of size of 72 nm (hence named R72), 2 mL (200 mg solid content) DADMAC@Si02 suspension was mixed with 5.259 mL Klebosol II 1 wt% (72 nm $SiO_2$ particles); milliQ water was added to get a reasonable volume for the centrifugation. The mixture was then stirred for 30 minutes, sonicated for 10 minutes and further stirred for 30 minutes. After that, the suspension was washed three times (10 min, 4000 rpm). The sediment was then diluted to get 1 wt% suspension of R72 raspberry-like particles.

The same approach was used to create raspberry particles with 39 and 12 nm spherical asperities (R39 and R12, respectively). In those cases, the amount of smaller silica particles was linearly rescaled; 2.85 mL of 1wt% 39 nm silica particles and 175 $\mu$L of 12 nm silica suspension at 5 wt%, respectively. Although the electrostatic absorption of the smaller nanoparticles is a random sequential absorption process, the amount of smaller silica spheres was calculated assuming the formation of a perfect monolayer covering of the cores. This guarantees an excess of smaller particles and an overall homogeneous coverage.

To prepare binary raspberries (BR), the sediment was diluted in 6 mL milliQ water and 80 $\mu$L of 12 nm $SiO_2$ particles 5 wt% are added to the raspberry suspension. The suspension is stirred for 30 minutes and then washed 3 times (4000 rpm, 10 min). The sediment was re-dispersed in milliQ water to get 1 wt% suspension. In this way, BR3912 (DADMAC@core960 -39&12nm) and BR7212 (DADMAC@core960- 72&12nm) were obtained. The binary nature of the spherical asperities improves the homogeneity of the smoothening process.

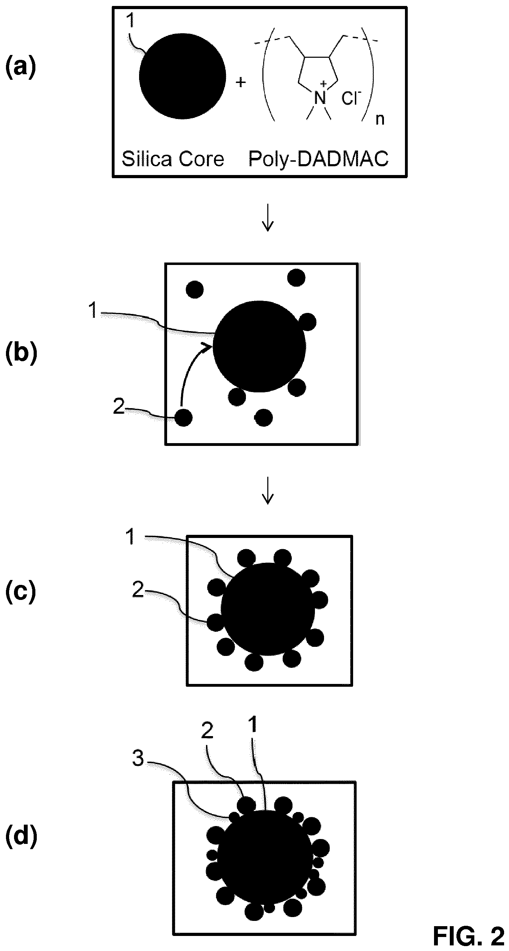

The reaction for the creation of raspberry-like particles is summarized in Fig 2. Step (a): Silica core particles 1 are functionalized with poly-DADMAC to increase electrostatic adhesion of smaller silica particles. Step (b): Smaller silica particles 2 are electrostatically adsorbed to the modified core particles. Step (c): After washing, raspberry particles are obtained. Step (d): Optionally, a second type of smaller silica particles 3 is electrostatically adsorbed so as to form binary raspberry particles.

## Surface Smoothening and Modification

For the 1-$\mu$m-colloids, 7.44 mL EtOH, 1.22 mL ammonia (25 vol%) and 0.99 mL raspberry suspension 1 wt% were mixed in a 50 mL KOH/HCl cleaned Erlenmeyer. The reaction flask was then sealed and a 5 vol% TEOS solution was dropped-in at an injection rate of 2 mL/h. The dropped-in volume together with the injection rate determines the final silica-layer thickness. The reaction was carried out under continuous sonication to reduce cluster formation and aggregation during synthesis.

Fig. 3 shows schematically the smoothening approach. Depending on the amount of TEOS solution and the injection rate, one or more silica layers 4, 5, 6 of varying thickness are formed on the surface of the raspberry-like particles. While Fig. 3 shows this process for binary raspberries with a bimodal size distribution of the asperities, the process is of course also applicable to "monomodal" raspberries with only one size of spherical asperities.

The smoothening and the choice of the smaller nanoparticles allows tuning the surface roughness, easily up to 20 nm in root-mean-square (RMS).

A final surface treatment was done to give the surface an equilibrium contact angle of approximately 70 degrees, ensuring that the particles can be dispersed both in water and in oil. To this end, as-produced raspberry-like particles were surface-activated as generally described in document [6] (see list of documents in section "Prior Art"). In particular, the particles were stirred in a mixture of $H_2O_2/NH_4OH/H_2O$ (1:1:1) at 70 °C for 10 minutes. In this way, a uniform layer of silanol groups was created on the particles' surface enhancing the homogeneity and efficiency of the subsequent silanization step. The activated particles were purified by centrifugation/re-dispersion in deionized water, and dried under reduced pressure at 60 °C. Afterwards, the particles were stirred for 48 hours in a 3 % APTES solution in deionized water to introduce amino groups to the surface. The APTES-modified particles were then purified by repeated washing and centrifugation cycles in ethanol and dried in a vacuum oven at 60 °C. The final functionalisation was achieved by grafting $\alpha$-bromoisobutyryl bromide (0.2 ml, 1.6 mM) onto the aminosilane-modified particles by incubation in dry dichloromethane (5 ml) in the presence of trimethylamine (0.4 ml) at room temperature for 4 hours. The particles were then purified by centrifugation/redispersion in dichloromethane, water and ethanol, and eventually dried under vacuum at 60 °C for harvesting.

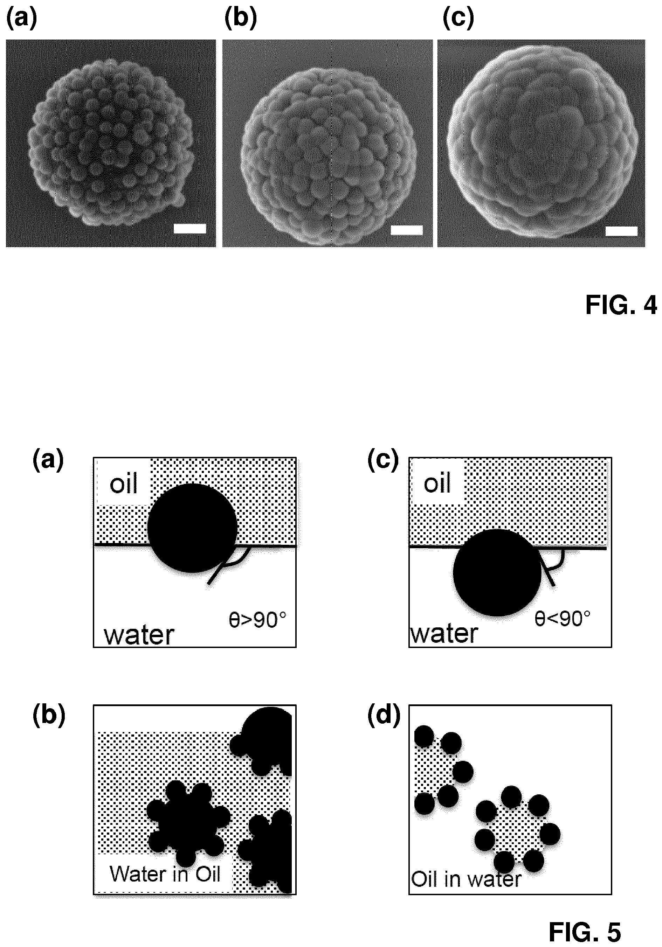

Figure 4 shows electron micrographs of exemplary smoothened raspberry particles obtained by this process. Part (a): RMS roughness 21 nm. Part (b): RMS roughness 12.5 nm. Part (c) RMS roughness 7.1 nm. Scale bar: 200 nm.

**Emulsification**

In "classical" Pickering emulsions, hydrophilic particles are dispersed in aqueous media and stabilize oil-in-water type of emulsions, while hydrophobic particles, which can only be suspended in nonpolar phases, necessarily lead to water-in-oil droplet formation. This is illustrated in Figure 5, which shows a sketch illustrating the stabilization of w/o emulsions by strongly hydrophobic particles (parts (a) and (b)) and of o/w emulsions by strongly hydrophilic particles (parts (c) and (d)), as it is known from the prior art.

When the particles are only slightly hydrophilic (e.g., $\Theta$ = 65-80°), it may be possible to disperse them either in the aqueous phase or in the nonpolar phase. This is illustrated in Figure 6, parts (a) and (b). When such particles are first dispersed in water, they will stabilize oil droplets upon emulsification. The same is true also when exactly the same particles are initially suspended in the oil phase. In fact, since they can smoothly reach their equilibrium position, i.e. contact angle, at the interface without getting pinned in metastable positions, they will stabilize oil-in-water droplets regardless of the fluid phase they were initially dispersed in.

When instead particles with the same surface chemistry, but rougher surfaces, are used, friction of the contact line on the surface asperities blocks the sliding of the contact line, pinning particles in positions far away from the equilibrium of one of their smooth equivalents. Therefore, the medium in which the particles are initially dispersed corresponds to the continuum phase of the emulsion, whereas the particle-free phase gets emulsified upon vigorous mixing. In Figure 6, part (c), rough particles with an equilibrium contact angle $\Theta$ = 65-115° (as it would be measured for a smooth surface) are first suspended in oil, leading to water-in-oil emulsions. In Figure 6, part (d), the same particles are instead first dispersed in water and thus stabilize oil-in-water emulsions. The difference in the nature of the produced emulsions can be readily observed visually: oil-in-water emulsion creams, whereas heavy water-droplets tend to sediment.

In order to act as universal emulsion stabilizers, the particles should preferably have the following two requirements: (1) they should have an appropriate surface chemistry allowing them to be dispersed both in oil and water (i.e., they must be neither too strongly hydrophilic nor too strongly hydrophobic; preferably they are slightly hydrophilic or slightly hydrophobic with an equilibrium contact angle of $\Theta$ = 65-115°); and (2) they should have an appropriate surface roughness causing permanent pinning of the contact line upon emulsification, leading to a sufficiently large contact angle difference depending on the side of the interface they adsorb from (contact angle hysteresis).

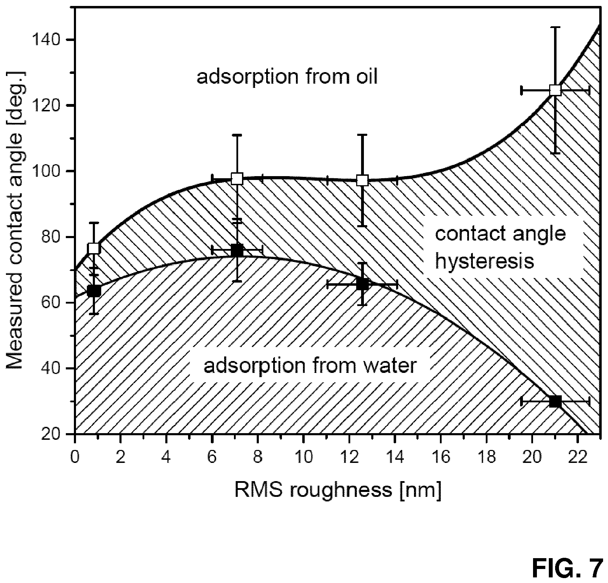

Figure 7 illustrates the experimentally determined contact angle hysteresis for slightly hydrophilic particles (equilibrium contact angle $\Theta$ = 65°) as a function of the surface roughness, measured as RMS roughness in nanometers. As apparent from this Figure, there is only very small contact angle hysteresis (less than 10°) if the particles have low surface roughness (below 1 nm RMS). The contact angle hysteresis reaches approximately 20°-25° when the surface roughness is about 7 nm RMS and continuously increases with increasing surface roughness, to reach the value of approximately 100° at the surface roughness of 21 nm. It has been found that the particles act as universal emulsion stabilizers if the surface roughness is at least 7 nm, corresponding to a contact angle hysteresis of at least 20°.

**Claims**

1. The use of particles as universal emulsion stabilizers for both oil-in-water type emulsions and water-in-oil type emulsions, the particles having an equilibrium contact angle of 65°-115° and a contact angle hysteresis of at least 20° at an interface of an aqueous phase and a nonpolar phase.

2. The use according to claim 1, wherein the contact angle hysteresis is at least 30°, preferably at least 40°.

3. The use according to claim 1 or 2, wherein the particles have near-spherical shape with an average diameter of 0.1-5 micrometers.

4. The use according to any one of the preceding claims, wherein the particles have a surface roughness of at least 7 nm RMS, preferably at least 10 nm RMS, more preferably at least 15 nm RMS.

5. The use according to any one of the preceding claims, wherein the particles comprise a near-spherical core and surface asperities distributed on a surface of the core, the surface asperities having:

   average height of 15-30 nanometers and lateral dimensions of 10-30 nanometers for a core having an average diameter between 0.1 and 0.5 micrometers,
   average height of 15-100 nanometers and lateral dimensions of 10-100 nanometers for a core having an average diameter between 0.5 and 1 micrometers, or
   average height of 15-300 nanometers and lateral dimensions of 10-300 nanometers for a core having an average diameter between 1 and 5 micrometers.

6. The use according to any one of the preceding claims, wherein an oil-in-water type emulsion is formed by first dispersing the particles in the aqueous phase, and wherein a water-in-oil type emulsion is formed by first dispersing the particles in the nonpolar phase.

7. A method of forming a first emulsion, the method comprising:

   dispersing particles in an aqueous phase, wherein the particles have an equilibrium contact angle of 65°-115° and a contact angle hysteresis of at least 20° at the interface between the aqueous phase and a nonpolar phase;
   mixing the aqueous phase comprising the particles dispersed therein with the nonpolar phase to form said first emulsion,
   whereby an oil-in-water type emulsion is formed, droplets of the nonpolar phase being formed in the aqueous phase, the droplets defining an interface between the aqueous phase and the nonpolar phase.

8. A method of forming a second emulsion, the method comprising:

   dispersing particles in a nonpolar phase, wherein the particles have an equilibrium contact angle of 65°-115° and a contact angle hysteresis of at least 20° at the interface between the nonpolar phase and an aqueous phase;
   mixing the nonpolar phase comprising the particles dispersed therein with the aqueous phase to form said second emulsion,
   whereby an water-in-oil type emulsion is formed, droplets of the aqueous phase being formed in the nonpolar phase, the droplets defining an interface between the aqueous phase and the nonpolar phase.

9. A particle having an equilibrium contact angle of 65°-115° and a contact angle hysteresis of at least 20° at an interface between an aqueous phase and a nonpolar phase, the particle having near-spherical shape with an average diameter of 0.1-5 micrometers, the particle having a surface roughness of at least 7 nm RMS.

10. The particle according to claim 9, comprising a near-spherical core and surface asperities distributed on a surface of the core, the surface asperities having:

    an average height of 15-30 nanometers and lateral dimensions of 10-30 nanometers for a core having an average diameter between 0.1 and 0.5 micrometers,
    an average height of 15-100 nanometers and lateral dimensions of 10-100 nanometers for a core having an average diameter between 0.5 and 1 micrometers, or
    an average height of 15-300 nanometers and lateral dimensions of 10-300 nanometers for a core having an average diameter between 1 and 5 micrometers.

11. The particle according to claim 10, wherein the surface asperities have a size distribution that is bimodal or multimodal.

12. The particle according to claim 10 or 11, wherein the core is made of silica, and wherein the surface asperities are formed by silica nanoparticles disposed on the core, the silica nanoparticles having an average diameter of 5-300 nanometers.

13. The particle according to claim 12, wherein the core is functionalized with a polyelectrolyte or molecular coating that facilitates electrostatic adhesion of said silica nanoparticles to the core.

14. The particle according to any one of claims 10 to 13, further comprising at least one surface layer disposed on an outer surface of said particle, the surface layer covering the surface asperities so as to reduce surface roughness of the particle.

**(a)**

**(b)**

FIG. 1

FIG. 3

**(a)**

1

Silica Core    Poly-DADMAC

**(b)**

1

2

**(c)**

1

2

**(d)**

3   2   1

**FIG. 2**

**(a)**          **(b)**          **(c)**

FIG. 4

**(a)**

oil

water                    θ>90°

**(c)**

oil

water                    θ<90°

**(b)**

Water in Oil

**(d)**

Oil in water

FIG. 5

**FIG. 6**

FIG. 7

Europäisches
Patentamt

European
Patent Office

Office européen
des brevets

# EUROPEAN SEARCH REPORT

Application Number

EP 16 20 4657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DENKOV N D ET AL: "A possible mechanism of stabilization of emulsions by solid particles", JOURNAL OF COLLOID AND INTERFACE SCIENCE, ACADEMIC PRESS,INC, US, vol. 150, no. 2, 1 May 1992 (1992-05-01), pages 589-593, XP024208931, ISSN: 0021-9797, DOI: 10.1016/0021-9797(92)90228-E [retrieved on 1992-05-01] * paragraphs [0001], [002a], [002b], [0005] * | 1,2 | INV. B01F17/00 |
| X | ADRIANA SAN-MIGUEL ET AL: "Influence of Nanoscale Particle Roughness on the Stability of Pickering Emulsions", LANGMUIR, vol. 28, no. 33, 30 June 2012 (2012-06-30) , pages 12038-12043, XP055382676, US ISSN: 0743-7463, DOI: 10.1021/la302224v * pages 39-42 * | 7-9 | |
| A | MADIVALA B ET AL: "Exploiting particle shape in solid stabilized emulsions", SOFT MATTER, R S C PUBLICATIONS, GB, vol. 5, no. 8, 2 March 2009 (2009-03-02), pages 1717-1727, XP002628844, ISSN: 1744-683X, DOI: 10.1039/B816680C * paragraphs [0003], [0004] * | 1-14 | TECHNICAL FIELDS SEARCHED (IPC) B01F |

-/--

The present search report has been drawn up for all claims

| Place of search | Date of completion of the search | Examiner |
|---|---|---|
| The Hague | 19 June 2017 | Grittern, Albert |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

Europäisches Patentamt
European Patent Office
Office européen des brevets

**EUROPEAN SEARCH REPORT**

Application Number

EP 16 20 4657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LARSON-SMITH K ET AL: "Small angle scattering model for Pickering emulsions and raspberry particles", JOURNAL OF COLLOID AND INTERFACE SCIENCE, ACADEMIC PRESS,INC, US, vol. 343, no. 1, 1 March 2010 (2010-03-01), pages 36-41, XP026969388, ISSN: 0021-9797 [retrieved on 2009-11-20] * the whole document * | 1-14 | |
| A | EP 1 958 687 A1 (UNILEVER PLC [GB]; UNILEVER NV [NL]) 20 August 2008 (2008-08-20) * paragraphs [0008] - [0010]; claims * | 1-14 | |

TECHNICAL FIELDS SEARCHED (IPC)

The present search report has been drawn up for all claims

| Place of search | Date of completion of the search | Examiner |
|---|---|---|
| The Hague | 19 June 2017 | Grittern, Albert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 4657

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2017

| Patent document cited in search report | | Publication date | Patent family member(s) | | Publication date |
|---|---|---|---|---|---|
| EP 1958687 | A1 | 20-08-2008 | AT | 534460 T | 15-12-2011 |
| | | | EP | 1958687 A1 | 20-08-2008 |
| | | | US | 2008292705 A1 | 27-11-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALARGOVA, R. G. ; WARHADPANDE, D. S. ; PAUNOV, V. N. ; VELEV, O. D.** Foam Superstabilization by Polymer Microrods. *Langmuir,* 2004, vol. 20, 10371-10374
- **BERGER, S. ; SYNYTSKA, A. ; IONOV, L. ; EICHHORN, K.-J. ; STAMM, M.** Stimuli-Responsive Bicomponent Polymer Janus Particles by ''Grafting from''/''Grafting to'' Approaches. *Macromolecules,* 2008, vol. 41, 9669-9676
- **BINKS, B. P. ; RODRIGUES, J. A.** Types of Phase Inversion of Silica Particle Stabilized Emulsions Containing Triglyceride Oil. *Langmuir,* 2003, vol. 19, 4905-4912
- **IMPERIALI, L. et al.** Interfacial Rheology and Structure of Tiled Graphene Oxide Sheets. *Langmuir,* 2012, vol. 28, 7990-8000
- **KIM, J. et al.** Graphene Oxide Sheets at Interfaces. *Journal of the American Chemical Society,* 2010, vol. 132, 8180-8186
- **KIRILLOVA, A. ; MARSCHELKE, C. ; FRIEDRICHS, J. ; WERNER, C. ; SYNYTSKA, A.** Hybrid Hairy Janus Particles as Building Blocks for Antibiofouling Surfaces. *ACS Applied Materials & Interfaces,* 2016, vol. 8, 32591-32603
- **MABLE, C. J. ; WARREN, N. J. ; THOMPSON, K. L. ; MYKHAYLYK, O. O. ; ARMES, S. P.** Framboidal ABC triblock copolymer vesicles: a new class of efficient Pickering emulsifier. *Chemical Science,* vol. 6, 6179-6188
- **MADIVALA, B. ; VANDEBRIL, S. ; FRANSAER, J. ; VERMANT, J.** Exploiting particle shape in solid stabilized emulsions. *Soft Matter,* 2009, vol. 5, 1717-1727
- **NIEBEL, T. P. et al.** Multifunctional microparticles with uniform magnetic coatings and tunable surface chemistry. *RSC Advances,* vol. 4, 62483-62491
- **NONOMURA, Y. ; KOBAYASHI, N. ; NAKAGAWA, N.** Multiple Pickering Emulsions Stabilized by Microbowls. *Langmuir,* 2011, vol. 27, 4557-4562
- **SAN-MIGUEL, A. ; BEHRENS, S. H.** Influence of Nanoscale Particle Roughness on the Stability of Pickering Emulsions. *Langmuir,* 2012, vol. 28, 12038-12043
- **VAN HOOGHTEN, R. ; IMPERIALI, L. ; BOECKX, V. ; SHARMA, R. ; VERMANT, J.** Rough nanoparticles at the oil-water interfaces: their structure, rheology and applications. *Soft Matter,* 2013, vol. 9, 10791-10798
- **VIS, M. et al.** Water-in-Water Emulsions Stabilized by Nanoplates. *ACS Macro Letters,* 2015, vol. 4, 965-968
- **ISA, L. ; LUCAS, F. ; WEPF, R. ; REIMHULT, E.** Measuring single-nanoparticle wetting properties by freeze-fracture shadow-casting cryo-scanning electron microscopy. *Nat Commun,* 2011, vol. 2, 438